# FASCICULE DE BREVET EUROPEEN

(11) **EP 3 803 301 B1**
(45) Date de publication et mention de la délivrance du brevet: **02.07.2025**
(21) Numéro de dépôt: 19725182.0
(22) Date de dépôt: 23.05.2019
(51) Int. Cl.: G01K 1/16

(54) **SYSTÈME DE MESURE D'UNE TEMPÉRATURE D'UN COMPOSANT ÉLECTRIQUE ET BRAS DE COMMUTATION COMPORTANT UN TEL SYSTÈME**
SYSTEM ZUM MESSEN EINER TEMPERATUR EINES ELEKTRISCHEN BAUTEILS UND SCHALTARM MIT EINEM SOLCHEN SYSTEM
SYSTEM FOR MEASURING A TEMPERATURE OF AN ELECTRICAL COMPONENT, AND SWITCHING ARM COMPRISING SUCH A SYSTEM

(30) Priorité: 08.06.2018 FR 1855045
(43) Date de publication de la demande: 14.04.2021
(73) Titulaire: Valeo Electrification, 95800 Cergy (FR)
(72) Inventeur: FALGUIER, Manuel, 94046 Créteil Cedex (FR); BAUDESSON, Philippe, 95892 Cergy Pontoise (FR); BODIN, Ludovic, 94046 Créteil Cedex (FR); BERTRAND, Mathieu, 94046 Créteil Cedex (FR); CAVES, Laurent, 94046 Créteil Cedex (FR)
(74) Mandataire: Valeo Powertrain Systems
(86) Numéro de dépôt international: PCT/EP2019/063278
(87) Numéro de publication internationale: WO 2019/233771

(56) Documents cités:
- EP-A1- 3 296 708
- EP-A2- 1 457 365
- DE-A1- 102010 030 769
- JP-A- 2005 278 339

## Description

### DOMAINE TECHNIQUE

La présente invention concerne un système de mesure d'une température d'un composant électrique et un bras de commutation comportant un tel système.

### ARRIÈRE-PLAN TECHNOLOGIQUE

La demande internationale PCT publiée sous le numéro WO 2007 003824 A2 décrit un système de mesure d'une température d'un composant électrique, comportant :
- un conducteur électrique présentant :
   - une portion principale,
   - une portion auxiliaire se projetant depuis la portion principale de manière à former un embranchement électrique,
- un composant électrique électriquement connecté à la portion principale du conducteur électrique,
- un circuit électronique connecté électriquement à la portion auxiliaire du conducteur électrique de manière à recevoir un potentiel électrique du conducteur électrique,
- un dispositif de mesure de température conçu pour fournir une mesure de température représentative d'une température du composant électrique.

Dans ce système connu, le composant électrique est un interrupteur commandable d'un bras de commutation, commandé par le circuit électronique, et le dispositif de mesure de température est plaqué contre la portion principale du conducteur électrique. Ainsi, la température de l'interrupteur produit un gradient de température jusqu'au dispositif de mesure de température, s'étendant dans la portion principale du conducteur électrique portant l'interrupteur.

Or, la portion principale du conducteur électrique et le composant électronique sont recouverts d'une couche d'isolant électrique qui risque de dégrader le dispositif de mesure de température, en particulier lorsque l'isolant électrique est de la résine d'époxy.

L'invention a pour but de pallier au moins en partie le problème précité.

JP2005278339 décrit un dispositif de circuit électronique comprenant un dissipateur thermique.

EP1457365 décrit un dispositif de détection de la température dans l'habitacle d'un véhicule.

EP3296708 décrit un thermomètre de corps profond.

### RÉSUMÉ DE L'INVENTION

À cet effet, il est proposé un système de mesure d'une température d'un composant électrique, comportant :
- un conducteur électrique présentant :
   - une portion principale,
   - une portion auxiliaire se projetant depuis la portion principale de manière à former un embranchement électrique,
- un composant électrique électriquement connecté à la portion principale du conducteur électrique,
- un circuit électronique connecté électriquement à la portion auxiliaire du conducteur électrique de manière à recevoir un potentiel électrique du conducteur électrique,
- un dispositif de mesure de température conçu pour fournir une mesure de température représentative d'une température du composant électrique.
caractérisé en ce qu'il comporte en outre :
- une connexion thermique entre la portion auxiliaire du conducteur électrique et le dispositif de mesure de température, cette connexion thermique étant distincte de la portion principale du conducteur électrique.

Grâce à l'invention, la portion auxiliaire du conducteur électrique, normalement utilisée pour que le circuit électronique récupère le potentiel du conducteur électrique, est en outre utilisée pour obtenir une mesure de température représentative d'une température du composant électrique. Ainsi, il est possible de placer le dispositif de mesure de température à distance du composant électrique et de la portion principale du conducteur électrique contre lequel il est plaqué, et donc en dehors de la couche d'isolant électrique les recouvrant.

Le système de mesure selon l'invention peut également comprendre une ou plusieurs des caractéristiques ci-dessous considérées individuellement ou selon toutes les combinaisons techniquement possibles.

Ainsi de façon optionnelle, la portion auxiliaire du conducteur électrique est en contact thermique direct avec la connexion thermique.

De façon optionnelle, la portion principale du conducteur électrique et le composant électrique sont destinés à être traversés par un courant principal et dans lequel la portion auxiliaire du conducteur électrique est destinée à être traversée par un courant auxiliaire valant au plus 10% du courant principal.

De façon optionnelle, la portion auxiliaire a une section conductrice au moins quatre fois plus petite que la section conductrice de la portion principale.

De façon optionnelle, les portions principale et auxiliaire du conducteur électrique sont formées dans une seule et même pièce conductrice électrique, par exemple en cuivre, découpée et pliée pour former ces portions principale et auxiliaire.

De façon optionnelle, le circuit électronique est un circuit électronique de commande du composant électrique, dans lequel le circuit électronique de commande est connecté au dispositif de mesure de température de manière à recevoir la mesure de température, et dans lequel le circuit électronique de commande est conçu pour commander le composant électrique en fonction du potentiel électrique du conducteur électrique et/ou de la mesure de température.

De façon optionnelle, le système comporte en outre une carte de circuit imprimé portant au moins une partie du circuit électronique et le dispositif de mesure de température.

De façon optionnelle, la portion auxiliaire du conducteur électrique atteint la carte de circuit imprimé, par exemple passe au travers d'une ouverture ménagée dans la carte de circuit imprimé, et dans lequel la connexion thermique s'étend sur la carte de circuit imprimé.

De façon optionnelle, la connexion thermique s'étend sur la carte de circuit imprimé et dans lequel la portion auxiliaire du conducteur électrique est en contact électrique avec la connexion thermique.

De façon optionnelle, la portion auxiliaire du conducteur électrique passe au travers d'une ouverture ménagée dans la carte de circuit imprimé.

De façon optionnelle, la connexion thermique comporte une première piste de la carte de circuit imprimé, et dans lequel le circuit électronique est connecté électriquement à la portion auxiliaire du conducteur électrique soit par cette première piste soit par une deuxième piste de la carte de circuit imprimé, différente de la première piste.

De façon optionnelle, le système comporte en outre une couche d'isolant électrique, par exemple de résine d'époxy, recouvrant le composant électrique et au moins partiellement la portion principale du conducteur thermique.

De façon optionnelle, le dispositif de mesure de température comporte au moins l'un parmi : une thermistance, une diode, une sonde platine.

De façon optionnelle, le composant électrique est plaqué contre la portion principale du conducteur électrique.

De façon optionnelle, le composant électrique est un interrupteur commandable, par exemple un transistor.

De façon optionnelle, l'interrupteur commandable présente deux bornes principales et une borne de commande, et dans lequel le conducteur électrique est électriquement connecté à l'une des deux bornes principales.

Il est également proposé un bras de commutation comportant :
- un interrupteur commandable de côté haut et un interrupteur commandable de côté bas, reliés l'un à l'autre en un point milieu,
- un premier système de mesure d'une température selon l'invention de l'un parmi l'interrupteur commandable de côté haut et l'interrupteur commandable de côté bas.

De façon optionnelle, le bras de commutation comporte en outre un deuxième système de mesure d'une température selon l'invention de l'autre parmi l'interrupteur commandable de côté haut et l'interrupteur commandable de côté bas.

### DESCRIPTION DES FIGURES

La figure 1 est un schéma électrique d'un système électrique mettant en œuvre l'invention.
La figure 2 est une vue en coupe très simplifiée d'une partie d'un convertisseur de tension du système électrique de la figure 1.
La figure 3 est une vue en trois dimensions d'une partie d'un module de puissance du convertisseur de tension de la figure 2.
La figure 4 est une vue de haut très simplifiée d'une carte de circuit imprimé du convertisseur de tension.

### DESCRIPTION DÉTAILLÉE

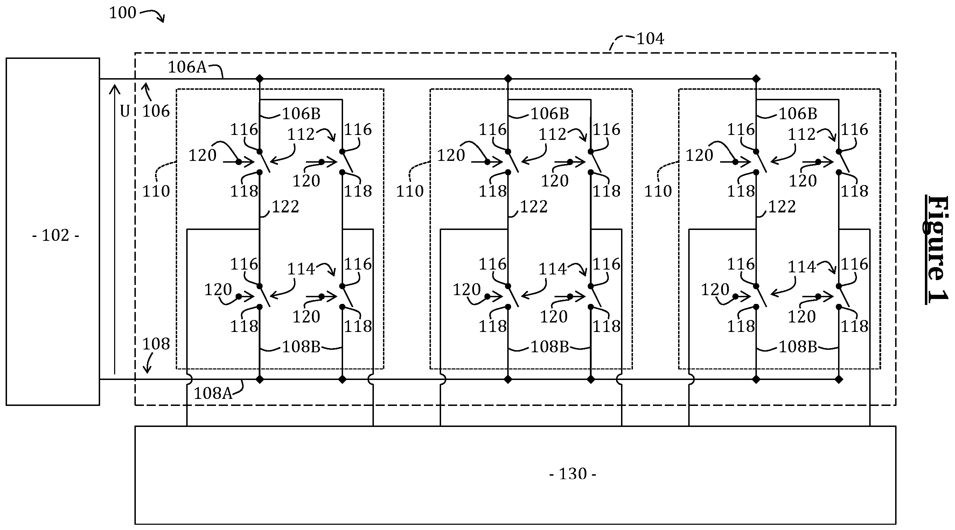

En référence à la figure 1, un système électrique 100 mettant en œuvre l'invention va à présent être décrit.

Le système électrique 100 est par exemple destiné à être implanté dans un véhicule automobile.

Le système électrique 100 comporte tout d'abord une source d'alimentation électrique 102 conçue pour délivrer une tension continue U, par exemple comprise entre 10 V et 100 V, par exemple 48 V ou bien 12 V. La source d'alimentation électrique 102 comporte par exemple une batterie.

Le système électrique 100 comporte en outre une machine électrique 130 comportant plusieurs phases (non représentées) destinées à présenter des tensions de phase respectives.

Le système électrique 100 comporte en outre un convertisseur de tension 104 connecté entre la source d'alimentation électrique 102 et la machine électrique 130 pour effectuer une conversion entre la tension continue U et les tensions de phase.

Le convertisseur de tension 104 comporte tout d'abord une barre omnibus positive 106 et une barre omnibus négative 108 destinées à être connectées à la source d'alimentation électrique 102 pour recevoir la tension continue U, la barre omnibus positive 106 recevant un potentiel électrique haut et la barre omnibus négative 108 recevant un potentiel électrique bas.

Le convertisseur de tension 104 comporte en outre au moins un module de puissance 110 comportant une ou plusieurs barres omnibus de phase 122 destinées être respectivement connectées à une ou plusieurs phases de la machine électrique 130, pour fournir leurs tensions de phase respectives.

Dans l'exemple décrit, le convertisseur de tension 104 comporte trois modules de puissance 110 comportant chacun deux barres omnibus de phase 122 connectées à deux phases de la machine électrique 130.

Plus précisément, dans l'exemple décrit, la machine électrique 130 comporte deux systèmes triphasés comportant chacun trois phases, et destinés à être électriquement déphasés de 120° l'un par rapport à l'autre. De préférence, les premières barres omnibus de phase 122 des modules de puissance 110 sont respectivement connectées aux trois phases du premier système triphasé, tandis que les deuxièmes barres omnibus de phase 122 des modules de puissance 110 sont respectivement connectées aux trois phases du deuxième système triphasé.

Chaque module de puissance 110 comporte, pour chaque barre omnibus de phase 122, un interrupteur de côté haut 112 connecté entre la barre omnibus positive 106 et la barre omnibus de phase 122 et un interrupteur de côté bas 114 connecté entre la barre omnibus de phase 122 et la barre omnibus négative 108. Ainsi, les interrupteurs 112, 114 sont agencés de manière à former un bras de commutation, dans lequel la barre omnibus de phase 122 forme un point milieu.

Chaque interrupteur 112, 114 comporte des première et deuxième bornes principales 116, 118 et une borne de commande 120 destinée à sélectivement ouvrir et fermer l'interrupteur 112, 114 entre ses deux bornes principales 116, 118 en fonction d'un signal de commande qui lui est appliqué. Les interrupteurs 112, 114 sont de préférence des transistors, par exemple des transistors à effet de champ à structure métal-oxyde-semiconducteur (de l'anglais « Metal Oxide Semiconductor Field Effect Transistor » ou MOSFET) présentant une grille formant la borne de commande 120, et un drain et une source formant respectivement les bornes principales 116, 118.

Dans l'exemple décrit, les interrupteurs 112, 114 ont chacun la forme d'une plaque, par exemple sensiblement rectangulaire, présentant une face supérieure et une face inférieure. La première borne principale 116 s'étend sur la face inférieure, tandis que la deuxième borne principale 118 s'étend sur la face supérieure. Les interrupteurs 112, 114 sont destinés à être traversés, entre leurs bornes principales 116, 118, par un courant supérieure à 1 A.

Il sera apprécié que la barre omnibus positive 106, la barre omnibus négative 108 et les barres omnibus de phase 122 sont des conducteurs électriques rigides conçus pour supporter les courants électriques d'au moins 1 A destinés à traverser les interrupteurs 112, 114. Elles présentent de préférence une épaisseur d'au moins 1 mm.

Par ailleurs, dans l'exemple décrit, la barre omnibus positive 106 comporte tout d'abord une barre omnibus commune positive 106A reliant les modules de puissance 110 et, dans chaque module de puissance 110, une barre omnibus locale positive 106B connectée à la barre omnibus commune positive 106A. De manière similaire, la barre omnibus négative 108 comporte une barre omnibus commune négative 108A reliant les modules de puissance 110 et, dans chaque module de puissance 110, une barre omnibus locale négative 108B pour chaque interrupteur de côté bas 114, les barres omnibus locales négatives 108B étant connectées à la barre omnibus commune négative 108A. Les connexions sont représentées sur la figure 1 par des losanges.

En outre, dans l'exemple décrit, la barre omnibus commune positive 106A et la barre omnibus commune négative 108A sont chacune formée d'une seule pièce conductrice.

En outre, dans l'exemple décrit, la machine électrique 130 a à la fois une fonction d'alternateur et de moteur électrique. Plus précisément, le véhicule automobile comporte en outre un moteur thermique (non représenté) présentant un axe de sortie auquel la machine électrique 130 est reliée par une courroie (non représentée). Le moteur thermique est destiné à entraîner des roues du véhicule automobile par l'intermédiaire de son axe de sortie. Ainsi, en fonctionnement comme alternateur, la machine électrique fournit de l'énergie électrique en direction de la source d'alimentation électrique 102 à partir de la rotation de l'axe de sortie. Le convertisseur de tension 104 fonctionne alors comme redresseur. En fonctionnement comme moteur électrique, la machine électrique entraîne l'arbre de sortie (en complément ou bien à la place du moteur thermique). Le convertisseur de tension 104 fonctionne alors comme onduleur.

La machine électrique 130 est par exemple localisée dans une boîte de vitesses ou bien dans un embrayage du véhicule automobile ou bien en lieu et place de l'alternateur.

Dans la suite de la description, la structure et la disposition des éléments du convertisseur de tension 104 vont être décrits plus en détails, en référence à une direction verticale H-B, « H » représentant le haut et « B » représentant le bas.

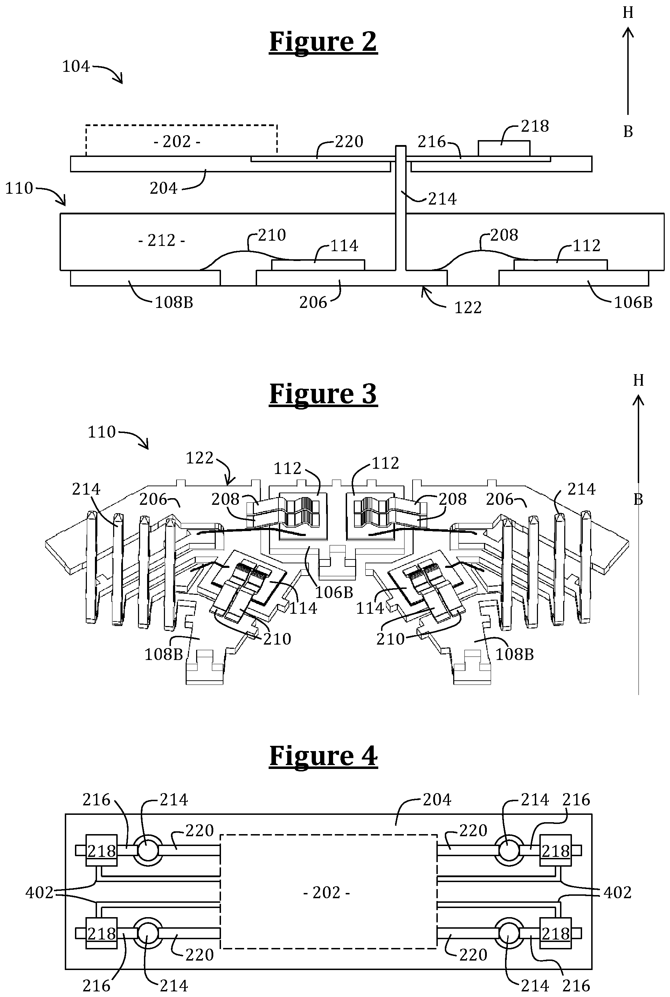

En référence à la figure 2, le convertisseur de tension 104 comporte un circuit électronique de commande 202 des interrupteurs 112, 114 et une carte de circuit imprimé 204 (en anglais : « Printed Circuit Board » ou PCB) portant au moins une partie du circuit de commande 202. Dans l'exemple décrit, la carte de circuit imprimé 204 s'étend horizontalement dans un boîtier en aluminium (non représenté). Le circuit électronique de commande 202 comporte par exemple un microcontrôleur porté par la carte de circuit imprimé 204. En outre, les commandes émises par le circuit électronique de commande 202 sont transmises aux interrupteurs 112, 114 via au moins un pilote (« driver » en anglais).

La barre omnibus de phase 122 comporte tout d'abord une portion principale 206 ayant la forme d'une plaque horizontale supportant un courant électrique supérieur à un ampère. Les barres omnibus locales 106B, 108B ont également la forme de plaques horizontales supportant un courant électrique supérieur à un ampère. Ces plaques horizontales 106B, 108B, 206 sont coplanaires et s'étendent les unes à côté des autres de manière à limiter l'encombrement vertical du module de puissance 110.

La face inférieure de l'interrupteur de côté haut 112 est plaquée contre une face supérieure de la barre omnibus locale positive 106B et brasée à cette dernière afin de fixer mécaniquement l'interrupteur de côté haut 112. Cette fixation permet en outre de connecter électriquement sa première borne principale à la barre omnibus locale positive 106B. En outre, une ou, de préférence, plusieurs bandes conductrices 208, par exemple en aluminium, s'étendent de la face supérieure de l'interrupteur de côté haut 112 à la portion principale 206 de la barre omnibus de phase 122 afin de les connecter électriquement. Alternativement, les bandes pourraient être remplacées par un fil conducteur ou bien un ruban conducteur ou bien un câblage par fil (de l'anglais « wire bondings »).

De manière similaire, la face inférieure de l'interrupteur de côté bas 114 est plaquée contre une face supérieure de la portion principale 206 de la barre omnibus de phase 122 et brasée à cette dernière afin de fixer mécaniquement l'interrupteur de côté bas 114. Cette fixation permet en outre de connecter électriquement sa première borne principale à la barre omnibus de phase 122. En outre, une ou, de préférence, plusieurs bandes conductrices 210, par exemple en aluminium, s'étendant de la face supérieure de l'interrupteur côté bas 114 à la barre omnibus locale négative 108B afin de les connecter électriquement. Ainsi, la portion principale 206 de la barre omnibus de phase 122 et l'interrupteur de côté bas sont destinés à être traversés par un courant principal pouvant valoir plus de 1 A.

L'interrupteur de côté haut 112 est plaqué contre la barre omnibus locale positive 106B pour y être connecté électriquement.

L'interrupteur de côté bas 114 est plaqué contre la portion principale 206 de la barre omnibus de phase 122, de manière à établir une connexion électrique et thermique entre l'interrupteur de côté bas 114 et la portion principale 206 de la barre omnibus de phase 122.

Le module de puissance 110 comporte en outre une couche d'isolant électrique 212 recouvrant les interrupteurs 112, 114 et les bandes conductrices 208, 210. La couche d'isolant électrique 212 recouvre en outre au moins partiellement les barres omnibus 106B, 108B et la portion principale 206 de la barre omnibus de phase 122. La couche d'isolant électrique 212 est par exemple un surmoulage en résine époxy. Le matériau utilisé pour la couche d'isolant électrique 212 présente par exemple une limite à la flexion supérieure à 80 N/mm², de préférence supérieure à 100 N/mm². Par exemple, Le matériau utilisé pour la couche d'isolant électrique 212 peut être une résine époxy portant la dénomination G720E type H dont la limite à la flexion est de 140 N/mm² ou une résine époxy portant la dénomination XE8495 dont la limite à la flexion est de 105 N/mm². Ainsi, la couche d'isolant électrique 212 est autoportante et ne nécessite pas d'être contenue dans une cuvette formé par un boîtier, ce qui simplifie la fabrication du module de puissance 110.

La barre omnibus de phase 122 comporte en outre une portion auxiliaire 214 se projetant depuis la portion principale 206 de la barre omnibus de phase 122 de manière à former un embranchement électrique. La portion auxiliaire 214 présente par exemple une section conductrice au moins quatre fois plus petite qu'une section conductrice de la portion principale 206 de la barre omnibus de phase 122. Au moins une partie de la portion auxiliaire 214 forme une broche verticale passant au travers d'une ouverture ménagée dans la carte de circuit imprimé 204. Par souci de clarté, la portion auxiliaire 214 sera simplement appelée « broche » dans la suite de la description. La broche 214 est destinée à être traversée par un courant auxiliaire valant au plus 10% du courant principal.

Il sera apprécié que, dans l'exemple décrit, la portion principale 206 et la broche 214 de la barre omnibus de phase 122 sont formées dans une seule et même pièce conductrice électrique, par exemple en cuivre, découpée et pliée pour former la portion principale 206 et la broche 214.

De même, les barres omnibus locales 108B présentent chacune une portion principale horizontale et une portion auxiliaire dont une partie forme une broche verticale passant au travers d'une ouverture ménagée dans la carte de circuit imprimé 204.

La carte de circuit imprimé 204 comporte une première piste 216 s'étendant depuis la broche 214.

Par ailleurs, la carte de circuit imprimé 204 porte un dispositif de mesure de température 218 placé sur la première piste 216. Ainsi, la première piste 216 forme une connexion thermique au contact, à la fois, de la broche 214 et du dispositif de mesure de température 218. Cette connexion thermique est distincte de la portion principale 206 de la barre omnibus de phase 122, c'est-à-dire qu'elle ne comprend pas la portion principale 206. Ainsi, la température de l'interrupteur de côté bas 114 produit un gradient de température depuis l'interrupteur de côté bas 114 jusqu'au dispositif de mesure de température 218, passant successivement par la portion principale 206, la broche 214 et la connexion thermique 216.

Le dispositif de mesure de température 218 comporte par exemple une thermistance, par exemple encore une thermistance CTN (Coefficient de Température Négatif) dont la résistance diminue quand la température augmente et vice-versa ou une thermistance CTP (Coefficient de Température positif) dont la résistance augmente quand la température augmente et vice-versa. Alternativement, le dispositif de mesure de température 218 peut comporter une diode présentant à ses bornes une chute de tension variant en fonction de la température. L'utilisation d'une diode permet de mesurer des températures plus élevées qu'avec une thermistance. Pour les températures encore plus élevées, le dispositif de mesure de température 218 peut comporter une sonde platine (également appelée « thermomètre à résistance de platine »).

Le dispositif de mesure de température 218 est ainsi agencé pour mesurer la température de la première piste 216 et fournir une mesure de cette température. Or, la première piste 216 est thermiquement connectée à l'interrupteur de côté bas 114 par l'intermédiaire de la broche 214 et de la portion principale 206 de la barre omnibus de phase. Ainsi, il existe un gradient de température entre l'interrupteur de côté bas 114 et le dispositif de mesure de température 218 de sorte que la mesure de température fournie est représentative d'une température de l'interrupteur de côté bas 114, aussi bien en régime permanent qu'en régime transitoire ou impulsionnel. En outre, le placement du dispositif de mesure de température 218 sur la carte de circuit imprimé 204, par rapport à son placement contre la portion principale 206 de la barre omnibus de phase 122, permet d'éviter l'utilisation de broches supplémentaires pour remonter la mesure de température jusqu'à la carte de circuit imprimé 204 pour la fournir au circuit électronique de commande 202.

En outre, il est intéressant d'utiliser la broche 214 pour déterminer la température de l'interrupteur de côté bas 114 puisque la faible inertie thermique de la broche 214 rend la mesure de température plus représentative de la température de l'interrupteur de côté bas en régime transitoire ou impulsionnel.

Par ailleurs, le dispositif de mesure de température 218 est connecté au circuit électronique de commande 202, par exemple par au moins une autre piste (non représentée sur la figure 2, mais portant la référence 402 sur la figure 4) de la carte de circuit imprimé 204, de sorte que le circuit électronique de commande 202 reçoive la mesure de température. De préférence, une seule piste 402 est utilisée pour transmettre la mesure de température au circuit électronique de commande 202, ce qui présente comme avantage de faciliter le routage sur la carte de circuit imprimé 204 et de limiter les déperditions et perturbations thermique. Alternativement, la piste 216 au contact de laquelle le dispositif de mesure de température 218 est placé pourrait être utilisée pour transmettre la mesure de température.

La carte de circuit imprimé 204 comporte une deuxième piste 220 s'étendant depuis la broche 214 et connectant électriquement le circuit électronique de commande 202 à la broche 214, de manière à recevoir un potentiel électrique de la barre omnibus de phase 122.

Ainsi, le circuit électronique de commande 202 est conçu pour commander les interrupteurs commandables 112, 114 en fonction du potentiel électrique de la barre omnibus de phase 122 et de la mesure de température.

La figure 3 illustre le module de puissance 110 de la figure 2, sans l'isolant électrique 212.

Le système décrit ci-dessus de mesure de température est répété pour les deux interrupteurs de côté bas 114 de deux des trois modules de puissance 110. Ainsi, en référence à la figure 4, dans l'exemple décrit, un dispositif de mesure de température 218 tel que celui décrit ci-dessus est prévu pour chacun des deux interrupteurs de côtés bas 114 de deux modules de puissance 110. Ainsi, la carte de circuit imprimé 204 porte quatre dispositifs de mesure de température 218. Chacun d'eux est connecté au circuit électronique de commande 202 par une piste 402 pour transmettre les mesures de température.

La présente invention n'est pas limitée aux modes de réalisation décrits précédemment. Il sera en effet apparent à l'homme du métier que des modifications peuvent y être apportées.

Par exemple, la première piste 216 de la carte de circuit imprimé 204 pourrait être utilisée pour connecter électriquement le circuit électronique de commande 202 à la broche 214, de sorte qu'il n'y aurait plus besoin de la deuxième piste 220.

En outre, une des broches de la de la barre omnibus locale négative 108B pourrait être utilisée à la place de la broche 214.

Dans un mode de réalisation non représenté la barre omnibus locale positive 106B comprend une broche pouvant être utilisée à la place de la broche 214.

## Revendications

1. Système de mesure d'une température d'un composant électrique (114), comportant :
- un conducteur électrique (122) présentant :
• une portion principale (206),
• une portion auxiliaire (214) se projetant depuis la portion principale (206) de manière à former un embranchement électrique,
- un composant électrique (114) électriquement connecté à la portion principale (206) du conducteur électrique (122),
- un circuit électronique (202) connecté électriquement à la portion auxiliaire (214) du conducteur électrique (122) de manière à recevoir un potentiel électrique du conducteur électrique (122),
- un dispositif de mesure de température (218) conçu pour fournir une mesure de température représentative d'une température du composant électrique (114),
- une connexion thermique (216) entre la portion auxiliaire (214) du conducteur électrique (122) et le dispositif de mesure de température (218), cette connexion thermique (216) étant distincte de la portion principale (206) du conducteur électrique (122).

2. Système selon la revendication 1, dans lequel la portion principale (206) du conducteur électrique (122) et le composant électrique (114) sont destinés à être traversés par un courant principal et dans lequel la portion auxiliaire (214) du conducteur électrique (122) est destinée à être traversée par un courant auxiliaire valant au plus 10% du courant principal.

3. Système selon la revendication 1 ou 2, dans lequel la portion auxiliaire (214) a une section conductrice au moins quatre fois plus petite que la section conductrice de la portion principale (206)

4. Système selon l'une quelconque des revendications 1 à 3, dans lequel les portions principale (206) et auxiliaire (214) du conducteur électrique (122) sont formées dans une seule et même pièce conductrice électrique, par exemple en cuivre, découpée et pliée pour former ces portions principale (206) et auxiliaire (214).

5. Système selon l'une quelconque des revendications 1 à 4, dans lequel le circuit électronique (202) est un circuit électronique de commande du composant électrique (114), dans lequel le circuit électronique de commande (202) est connecté au dispositif de mesure de température (218) de manière à recevoir la mesure de température, et dans lequel le circuit électronique de commande (202) est conçu pour commander le composant électrique (114) en fonction du potentiel électrique du conducteur électrique (122) et/ou de la mesure de température.

6. Système selon l'une quelconque des revendications 1 à 5, comportant en outre une carte de circuit imprimé (204) portant au moins une partie du circuit électronique (202) et le dispositif de mesure de température (218).

7. Système selon la revendication 6, dans lequel la portion auxiliaire (214) du conducteur électrique (122) atteint la carte de circuit imprimé (204), par exemple passe au travers d'une ouverture ménagée dans la carte de circuit imprimé (204), et dans lequel la connexion thermique (216) s'étend sur la carte de circuit imprimé (204).

8. Système selon la revendication 7, dans lequel la connexion thermique (216) comporte une première piste de la carte de circuit imprimé (204), et dans lequel le circuit électronique (202) est connecté électriquement à la portion auxiliaire (214) du conducteur électrique (122) soit par cette première piste soit par une deuxième piste (220) de la carte de circuit imprimé (204), différente de la première piste (216).

9. Système selon l'une quelconque des revendications 1 à 8, comportant en outre une couche d'isolant électrique (212), par exemple de résine d'époxy, recouvrant le composant électrique (114) et au moins partiellement la portion principale (206) du conducteur thermique.

10. Système selon l'une quelconque des revendications 1 à 9, dans lequel le dispositif de mesure de température (218) comporte au moins l'un parmi : une thermistance, une diode, une sonde platine.

11. Système selon l'une quelconque des revendications 1 à 10, dans lequel le composant électrique (114) est plaqué contre la portion principale (206) du conducteur électrique (122).

12. Système selon l'une quelconque des revendications 1 à 11, dans lequel le composant électrique (114) est un interrupteur commandable, par exemple un transistor.

13. Système selon la revendication 12, dans lequel l'interrupteur commandable (114) présente deux bornes principales (116, 118) et une borne de commande (120), et dans lequel le conducteur électrique (122) est électriquement connecté à l'une des deux bornes principales (116, 118).

14. Bras de commutation comportant :
- un interrupteur commandable de côté haut (112) et un interrupteur commandable de côté bas (114), reliés l'un à l'autre en un point milieu,
- un premier système selon la revendication 12 ou 13 de mesure d'une température de l'un parmi l'interrupteur commandable de côté haut (112) et l'interrupteur commandable de côté bas (114).

15. Bras de commutation selon la revendication 14, comportant en outre un deuxième système selon la revendication 12 ou 13 de mesure d'une température de l'autre parmi l'interrupteur commandable de côté haut (112) et l'interrupteur commandable de côté bas (114).

## Patentansprüche

1. System zur Messung einer Temperatur einer elektrischen Komponente (114), umfassend:
- einen elektrischen Leiter (122) mit:
• einem Hauptabschnitt (206),
• einem Nebenabschnitt (214), der sich vom Hauptabschnitt (206) so erstreckt, dass er eine elektrische Abzweigung bildet,
- eine elektrische Komponente (114), die elektrisch mit dem Hauptabschnitt (206) des elektrischen Leiters (122) verbunden ist,
- eine elektronische Schaltung (202), die elektrisch mit dem Nebenabschnitt (214) des elektrischen Leiters (122) verbunden ist, um ein elektrisches Potential des elektrischen Leiters (122) zu empfangen,
- eine Temperaturmesseinrichtung (218), die dazu ausgelegt ist, einen Temperaturmesswert zu liefern, der für eine Temperatur der elektrischen Komponente (114) repräsentativ ist,
- eine thermische Verbindung (216) zwischen dem Nebenabschnitt (214) des elektrischen Leiters (122) und der Temperaturmesseinrichtung (218), wobei diese thermische Verbindung (216) vom Hauptabschnitt (206) des elektrischen Leiters (122) getrennt ist.

2. System nach Anspruch 1, wobei der Hauptabschnitt (206) des elektrischen Leiters (122) und die elektrische Komponente (114) dazu bestimmt sind, von einem Hauptstrom durchflossen zu werden, und wobei der Nebenabschnitt (214) des elektrischen Leiters (122) dazu bestimmt ist, von einem Nebenstrom durchflossen zu werden, der höchstens 10 % des Hauptstroms beträgt.

3. System nach Anspruch 1 oder 2, wobei der Nebenabschnitt (214) einen mindestens viermal kleineren Leiterquerschnitt als der Leiterquerschnitt des Hauptabschnitts (206) aufweist.

4. System nach einem der Ansprüche 1 bis 3, wobei die Hauptabschnitte (206) und Nebenabschnitte (214) des elektrischen Leiters (122) in einem einzigen elektrisch leitenden Teil, beispielsweise aus Kupfer, gebildet sind, der geschnitten und gefaltet ist, um diese Hauptabschnitte (206) und Nebenabschnitte (214) zu bilden.

5. System nach einem der Ansprüche 1 bis 4, wobei die elektronische Schaltung (202) eine elektronische Steuerschaltung der elektrischen Komponente (114) ist, wobei die elektronische Steuerschaltung (202) mit der Temperaturmesseinrichtung (218) verbunden ist, um den Temperaturmesswert zu empfangen, und wobei die elektronische Steuerschaltung (202) dazu ausgelegt ist, die elektrische Komponente (114) in Abhängigkeit vom elektrischen Potential des elektrischen Leiters (122) und/oder dem Temperaturmesswert zu steuern.

6. System nach einem der Ansprüche 1 bis 5, außerdem umfassend eine Leiterplatte (204), die mindestens einen Teil der elektronischen Schaltung (202) und die Temperaturmesseinrichtung (218) trägt.

7. System nach Anspruch 6, wobei der Nebenabschnitt (214) des elektrischen Leiters (122) die Leiterplatte (204) erreicht, beispielsweise durch eine in der Leiterplatte (204) vorgesehene Öffnung hindurchtritt, und wobei sich die thermische Verbindung (216) auf der Leiterplatte (204) erstreckt.

8. System nach Anspruch 7, wobei die thermische Verbindung (216) eine erste Leiterbahn der Leiterplatte (204) umfasst und wobei die elektronische Schaltung (202) elektrisch mit dem Nebenabschnitt (214) des elektrischen Leiters (122) entweder über diese erste Leiterbahn oder über eine zweite Leiterbahn (220) der Leiterplatte (204), die sich von der ersten Leiterbahn (216) unterscheidet, verbunden ist.

9. System nach einem der Ansprüche 1 bis 8, außerdem umfassend eine Schicht aus elektrischem Isolator (212), beispielsweise aus Epoxidharz, die die elektrische Komponente (114) und mindestens teilweise den Hauptabschnitt (206) des Wärmeleiters bedeckt.

10. System nach einem der Ansprüche 1 bis 9, wobei die Temperaturmesseinrichtung (218) mindestens eines der folgenden Elemente umfasst: einen Thermistor, eine Diode, einen Platinsensor.

11. System nach einem der Ansprüche 1 bis 10, wobei die elektrische Komponente (114) gegen den Hauptabschnitt (206) des elektrischen Leiters (122) plattiert ist.

12. System nach einem der Ansprüche 1 bis 11, wobei die elektrische Komponente (114) ein steuerbarer Schalter, beispielsweise ein Transistor, ist.

13. System nach Anspruch 12, wobei der steuerbare Schalter (114) zwei Hauptanschlüsse (116, 118) und einen Steueranschluss (120) aufweist und wobei der elektrische Leiter (122) mit einem der beiden Hauptanschlüsse (116, 118) elektrisch verbunden ist.

14. Schaltarm, umfassend:
- einen steuerbaren High-Side-Schalter (112) und einen steuerbaren Low-Side-Schalter (114), die an einem Mittelpunkt miteinander verbunden sind,
- ein erstes System nach Anspruch 12 oder 13 zur Messung einer Temperatur von einem der beiden steuerbaren Schalter (112, 114).

15. Schaltarm nach Anspruch 14, außerdem umfassend ein zweites System nach Anspruch 12 oder 13 zur Messung einer Temperatur des anderen der beiden steuerbaren Schalter (112, 114).

## Claims

1. A system for measuring a temperature of an electrical component (114), comprising:
- an electrical conductor (122) having:
• a main portion (206),
• an auxiliary portion (214) projecting from the main portion (206) so as to form an electrical branch,
- an electrical component (114) electrically connected to the main portion (206) of the electrical conductor (122),
- an electronic circuit (202) electrically connected to the auxiliary portion (214) of the electrical conductor (122) so as to receive an electrical potential from the electrical conductor (122),
- a temperature measuring device (218) designed to provide a temperature measurement representative of a temperature of the electrical component (114),
- a thermal connection (216) between the auxiliary portion (214) of the electrical conductor (122) and the temperature measuring device (218), this thermal connection (216) being distinct from the main portion (206) of the electrical conductor (122).

2. System according to claim 1, wherein the main portion (206) of the electrical conductor (122) and the electrical component (114) are intended to be traversed by a main current and wherein the auxiliary portion (214) of the electrical conductor (122) is intended to be traversed by an auxiliary current amounting to at most 10% of the main current.

3. System according to claim 1 or 2, wherein the auxiliary portion (214) has a conductive cross-section at least four times smaller than the conductive cross-section of the main portion (206).

4. System according to any one of claims 1 to 3, wherein the main portion (206) and auxiliary portion (214) of the electrical conductor (122) are formed in a single electrically conductive piece, for example of copper, cut and folded to form said main portion (206) and auxiliary portion (214).

5. System according to any one of claims 1 to 4, wherein the electronic circuit (202) is an electronic control circuit of the electrical component (114), wherein the electronic control circuit (202) is connected to the temperature measuring device (218) so as to receive the temperature measurement, and wherein the electronic control circuit (202) is designed to control the electrical component (114) according to the electrical potential of the electrical conductor (122) and/or the temperature measurement.

6. System according to any one of claims 1 to 5, further comprising a printed circuit board (204) carrying at least part of the electronic circuit (202) and the temperature measuring device (218).

7. System according to claim 6, wherein the auxiliary portion (214) of the electrical conductor (122) reaches the printed circuit board (204), for example passes through an opening provided in the printed circuit board (204), and wherein the thermal connection (216) extends on the printed circuit board (204).

8. System according to claim 7, wherein the thermal connection (216) comprises a first track of the printed circuit board (204), and wherein the electronic circuit (202) is electrically connected to the auxiliary portion (214) of the electrical conductor (122) either by this first track or by a second track (220) of the printed circuit board (204), different from the first track (216).

9. System according to any one of claims 1 to 8, further comprising a layer of electrical insulation (212), for example of epoxy resin, covering the electrical component (114) and at least partially the main portion (206) of the thermal conductor.

10. System according to any one of claims 1 to 9, wherein the temperature measuring device (218) comprises at least one of: a thermistor, a diode, a platinum probe.

11. System according to any one of claims 1 to 10, wherein the electrical component (114) is plated against the main portion (206) of the electrical conductor (122).

12. System according to any one of claims 1 to 11, wherein the electrical component (114) is a controllable switch, for example a transistor.

13. System according to claim 12, wherein the controllable switch (114) has two main terminals (116, 118) and a control terminal (120), and wherein the electrical conductor (122) is electrically connected to one of the two main terminals (116, 118).

14. A switching arm comprising:
- a high-side controllable switch (112) and a low-side controllable switch (114), connected to each other at a midpoint,
- a first system according to claim 12 or 13 for measuring a temperature of one of the high-side controllable switch (112) and the low-side controllable switch (114).

15. Switching arm according to claim 14, further comprising a second system according to claim 12 or 13 for measuring a temperature of the other of the high-side controllable switch (112) and the low-side controllable switch (114).
